# EUROPÄISCHE PATENTSCHRIFT

(11) **EP 2 561 390 B1**
(45) Veröffentlichungstag und Bekanntmachung des Hinweises auf die Patenterteilung: **18.03.2015**
(21) Anmeldenummer: 11717216.3
(22) Anmeldetag: 20.04.2011
(51) Int. Cl.: G02B 6/35, G02B 6/42

(54) **VERFAHREN UND ANORDNUNG ZUM EINKOPPELN VON VON LEDs EMITTIERTER STRAHLUNG**
METHOD AND ARRANGEMENT FOR COUPLING IN RADIATION EMITTED BY LEDS
PROCÉDÉ ET ENSEMBLE DE COUPLAGE D'UN RAYONNEMENT ÉMIS PAR DES DEL

(30) Priorität: 19.07.2010 DE 102010036496; 23.04.2010 DE 102010016622
(43) Veröffentlichungstag der Anmeldung: 27.02.2013
(73) Patentinhaber: DeguDent GmbH, 63457 Hanau (DE)
(72) Erfinder: ERTL, Thomas, 63691 Ranstadt (DE); HERZIG, Johannes, 42477 Radevormwald (DE)
(74) Vertreter: Stoffregen, Hans-Herbert
(86) Internationale Anmeldenummer: PCT/EP2011/056306
(87) Internationale Veröffentlichungsnummer: WO 2011/131710

(56) Entgegenhaltungen:
- EP-A2- 1 602 962
- WO-A2-2010/045062

## Beschreibung

Die Erfindung bezieht sich auf ein Verfahren zum Beaufschlagen eines zu messenden zahntechnischen Objektes mit hoher Lichtleistung. Auch nimmt die Erfindung Bezug auf eine Anordnung zum Übertragen von von im Pulsbetrieb betriebenen LEDs emittierter Strahlung über zumindest einen Lichtleiter, umfassend LEDs, erste und zweite Lichtleiter, ein zu messendes Objekt sowie ggfs. ein optisches Umlenkelement wobei jeder LED ein erster Lichtleiter mit ersten und zweiten Koppelflächen zugeordnet ist, wobei die ersten Koppelflächen auf einem ersten Kreis mit einem ersten Durchmesser angeordnet sind, die ersten Lichtleiter mit ihren ersten Koppelflächen jeweils auf eine stationär angeordnete LED ausgerichtet sind, die zweiten Koppelflächen auf einer geschlossenen Kreisbahn mit einem zweiten Durchmesser angeordnet sind und den zweiten Koppelflächen eine Koppelfläche eines zweiten Lichtleiters zugeordnet ist, wobei der erste Durchmesser größer als der zweite Durchmesser ist.

Lichtquellen zur Einkopplung in Faserbündel oder Lichtleitfasern verwenden derzeit entweder Halogenlampen oder Xe-Lampen. Beiden gemeinsam ist ein niedriger Wirkungsgrad und entsprechend hohe Stromaufnahme.

Weißlicht-LEDs sind zwar mittlerweile recht leistungsfähig, allerdings ist die erzielbare Energiedichte immer noch deutlich kleiner als beispielsweise einer Xe-Lampe. Dies liegt zum einen an der relativ großen räumlichen Ausdehnung der lichterzeugenden Fläche, zum anderen an dem großen Abstrahlwinkel, der eine effiziente Einkopplung in Fasern oder Faserbündel erschwert. Man kann zwar eine Lichtleitfaser sehr nahe an den Chip der LED bringen oder eine abbildende Optik einsetzen, dennoch reicht die Leistungsdichte oft nicht aus.

Taper zur Verbesserung der Einkopplungseffizienz haben den Nachteil, dass sich der Aperturwinkel weiter erhöht und dichroitische Beam combiner haben den Nachteil, dass sie nur beim Zusammenführen selektiven Wellenlängenbereichen einsetzbar sind.

Dies führt dazu, dass sich Anforderungen mit hoher Lichtleistung, die in Lichtleitfasern eingekoppelt werden sollen, nicht mit LEDs lösen lassen.

Die US-A-2008/0310181 bezieht sich auf ein Beleuchtungssystem hoher Helligkeit, das bei einer Endoskopkamera benutzt werden kann. Die Anordnung umfasst Gruppen von blauen, grünen und roten Leuchtdioden, deren Licht über Lichtleitfasern auf ein Übertragungsbündel und über einen Mischer auf ein optisches Bündel 2 übertragen wird, um sodann das Licht für die Endoskopkamera benutzen zu können.

Gegenstand der US-A-5,109,447 ist eine Breitbandsignallichtquelle. Hierzu ist ein Wellenleiterkoppler vorgesehen, der die über eine Vielzahl von LEDs zugeordneten Lichtleitern übertragenen Signale einem zweiten Lichtleiter zuführt, der einen Breitbandausgang aufweist.

Bei einer Beleuchtungsvorrichtung nach der US-A-2005/0046807 wird von auf einem Kreis angeordneten LEDs Licht auf einen zweiten Lichtleiter übertragen, der auf ein LCD ausgerichtet ist.

Die DE-U-20 2008 006 191 bezieht sich auf eine Anordnung zum Einsatz von Leuchtdioden für leistungsstarke Belichtungszwecke. Dabei wird eine Vielzahl von Leuchtdioden benutzt, wobei jeder LED eine erste Koppelfläche eines Lichtleiters zugeordnet ist. Die zweiten Koppelflächen der Lichtleiter werden sodann kabelähnnlich in einer Lichtleitereinheit zusammengefasst, um einen Lichtemissionsbereich zu bilden.

Die EP-A-1 602 962 bezieht sich auf eine Beleuchtungsvorrichtung und einen Bildprojektionsapparat. Über Lichtstäbe wird Licht übertragen, wobei die Lichtstäbe einen sich verändernden Durchmesser aufweisen, um ein großflächiges Lichtfeld zu erzeugen.

Gegenstand der WO-A-2010/045062 ist ein Mikrofilm-Abbildungssystem, bei dem eine Synchronisation zwischen LED-Emitter und Betrieb einer Zeilenkamera erfolgt.

Der vorliegenden Erfindung liegt die Aufgabe zugrunde, ein Verfahren und eine Anordnung der eingangs genannten Art so weiterzubilden, dass mittels LEDs hohe Lichtleistung zum Beaufschlagen von zu messenden zahntechnischen Objekten erzeugt wird. Dabei soll der konstruktive Aufwand gering sein und gleichzeitig die Möglichkeit geschaffen werden, eine Leistungsabgabe gewünschter Welligkeit zu erzielen. Auch ist es Aufgabe der Erfindung, Totzeiten zu minimieren und die Stromzuführung zu den LEDs zu vereinfachen.

Verfahrensmäßig wird die Aufgabe im Wesentlichen gelöst durch ein Verfahren zum Beaufschlagen eines zu messenden zahntechnischen Objekts mit hoher Lichtleistung, wobei
- von einer Vielzahl von LEDs emittierte Strahlung in einen Lichtleiter eingekoppelt wird,
- jede LED stationär angeordnet wird, und die LEDs auf einem ersten Kreis mit einem ersten Durchmesser angeordnet werden,
- jeder LED ein erster Lichtleiter in Form einer gebogenen Lichtleitfaser mit ersten und zweiten Koppelflächen zugeordnet wird, wobei die zweiten Koppelflächen auf einem zweiten Kreis mit einem zweiten Durchmesser angeordnet werden,
- jeweils über eine erste Koppelfläche in einen der ersten Lichtleiter Strahlung von einem der LEDs eingekoppelt wird,
- die aus den zweiten Koppelflächen austretende Strahlung der jeweils eingeschalteten LED auf eine Koppelfläche eines zweiten Lichtleiters in Form einer Lichtleitfaser übertragen wird,
- mit der aus dem zweiten Lichtleiter austretenden Strahlung das zu messende zahntechnische Objekt beaufschlagt wird,
wobei die LEDs im Pulsbetrieb mit einer Pulsdauer zwischen 1µs und 100 ms und einem Puls-Pause-Verhältnis kleiner 1 und aufeinander folgend betrieben werden und dass die zweiten Koppelflächen auf einer geschlossenen Bahn angeordnet werden, entlang der der zweite Lichtleiter mit seiner Koppelfläche oder eine auf die Koppelfläche des stationär angeordneten zweiten Lichtleiters ausgerichtete Optik bewegt wird und wobei die zweite Koppelfläche bei bewegtem zweiten Lichtlieter und die Optik bei stationär angeordnetem zweiten Lichtleiter um eine Achse gedreht wird und der erste und der zweite Kreis in voneinander abweichenden Ebenen die Achse schneiden.

Erfindungsgemäß macht man sich die Eigenschaft von LEDs, insbesondere Weißlicht-LEDs zu eigen, dass sich diese bis zum Faktor 50 oder etwas mehr, verglichen mit dem Maximalstrom im CW-Betrieb, im Pulsbetrieb betrieben werden können. Somit kann eine LED wie Weißlicht-LED bei entsprechend kurzen Pulsen unter Beibehaltung der mittleren Leistung bei entsprechendem Duty-Cycle mit hoher Pulsleistung betrieben werden.

Um unnötige Totzeiten zu vermeiden und insbesondere Schleifringe für die Stromzufuhr der LEDs zu umgehen, werden erfindungsgemäß die LEDs stationär angeordnet. Den den LEDs zugeordneten ersten Lichtleitern wird sodann ein zweiter Lichtleiter zugeordnet, der entweder stationär oder mit seiner Koppelfläche derart zu den zweiten Koppelflächen der ersten Lichtleiter ausrichtbar ist, dass im gewünschten Umfang und entsprechend der Taktfolge der eingeschalteten LEDs eine Ausrichtung auf den Lichtleiter - ggf. zwei benachbarten Lichtleitern von LEDs - erfolgt, die von Strom durchflossen sind und somit Licht emittieren.

Mit anderen Worten wird eine gewünschte Anzahl von LEDs benutzt, deren Licht zeitlich nacheinander in erste Lichtleitfasern gekoppelt wird, so dass die Leistung bis zum Faktor 50 oder mehr angehoben werden kann.

Es bestünde zwar auch die Möglichkeit, LEDs auf einem Drehrad anzuordnen und einen Lichtimpuls genau zu dem Zeitpunkt von einem LED zu erzeugen, zu dem sich dieses gegenüber einem Lichtleiter befindet, der stationär angeordnet ist. Hierdurch würden jedoch unnötige Totzeiten entstehen. Ein weiterer Nachteil sind erforderliche Schleifringe für die Stromzufuhr der LEDs.

Aufgrund der erfindungsgemäßen Lehre werden Totzeiten minimiert, Schleifringe vermieden und wahlweise eine möglichst gleichmäßige Leistungsangabe oder gezielt Pulse in einem definierten Zeitraster erzeugt. Hierdurch ergibt sich auch die Möglichkeit, das Zeitraster zur Bildwiederholrate (Frame rate) einer Aufnahmeeinheit wie CCD Kamera zu synchronisieren.

Entsprechend der erfindungsgemäßen Lehre werden die ersten Lichtleiter derart angeordnet, dass jeweils ein erster Lichtleiter wie kurzes Stück Lichtleitfaser an eine LED angekoppelt wird. Dies kann durch direktes Aufsetzen nahe der Chipfläche des LEDs erfolgen. Sodann besteht die Möglichkeit, die ersten Lichtleiter kreisförmig möglichst eng anzuordnen, wobei das Coating der Lichtleiter zumindest im Bereich der zweiten Koppelflächen entfernt werden kann, um die Totzeiten zu reduzieren. Den entsprechenden ersten Lichtleitern wie Lichtleitfasern wird sodann ein zweiter Lichtleiter zugeordnet, um die gepulste Strahlung der einzelnen Lichtleiter weiterzuleiten. Dabei kann das Licht hoher Leistungsdichte z. B. zum Beaufschlagen eines zu messenden Objekts wie Zahn oder Kieferbereich benutzt werden, der zu messen ist.

Die Länge der Lichtleiter sollte so gewählt werden, dass Biegeradien weitgehend vermieden werden.

Es besteht die Möglichkeit, den zweiten Lichtleiter entlang den zweiten Koppelflächen der ersten Lichtleiter zu führen, wobei eine Synchronisation zu den sequenziell eingeschalteten LEDs erfolgt. So kann z. B. der zweite Lichtleiter mit seiner Koppelfläche entlang einer Kreisbahn bewegt werden, wobei die zweite Koppelfläche eines ersten Lichtleiters eines eingeschalteten LEDs zum Zeitpunkt der Einschaltung zentriert der Koppelfläche des zweiten Lichtleiters gegenübersteht.

Anstelle eines bewegten zweiten Lichtleiters kann dieser auch stationär angeordnet werden, wobei zur Einkopplung der gepulsten Strahlung ein optisches Umlenkelement benutzt wird, das entsprechend entlang der zweiten Koppelflächen der ersten Lichtleiter bewegt wird, um sodann das Licht in den zweiten Lichtleiter einzukoppeln. Das optische Umlenkelement wie Umlenkprisma kann auf einem rotierenden Träger angeordnet sein, um das Licht der ersten Lichtleiter auf den zweiten Lichtleiter umzulenken.

Abweichend von einer Kreisform können die zweiten Koppelflächen auch rasterförmig positioniert sein, um sequenziell die Strahlung in den zweiten Lichtleiter über Spiegel oder rotierende Prismenräder oder Kombinationen entsprechender optischer Umlenkmittel einzukoppeln.

Wird die Koppelfläche des zweiten Lichtleiters über die zweiten Koppelflächen der ersten Lichtleiter bewegt, so sind die Koppelverluste variabel und abhängig von der jeweiligen Position des zu den ersten Lichtleitern bewegten zweiten Lichtleiters. Gleiches ergibt sich bei zu den ersten Lichtleitern zu verstellender Koppeloptik.

Um ungeachtet dessen eine möglichst gleichmäßige Leistungsabgabe zu erzielen, sieht die Erfindung in Weiterbildung vor, dass jeweils zwei benachbarte LEDs gleichzeitig angesteuert werden. Somit sind jeweils benachbarte LEDs eingeschaltet, wenn die Koppelfläche des zweiten Lichtleiters teilweise die den den eingeschalteten LEDs zugeordneten ersten Lichtleiter optisch erfasst, also gegenüber angeordnet ist. Die verbleibende Restwelligkeit kann mit einer Ausgleichsmodulation des LED Stroms eliminiert werden. Dies kann über eine Steuerung oder eine Regelung erfolgen.

Aber auch ein gepulster Betrieb ist möglich. Um eine maximale Kopplungseffizienz zu erzielen, kann im Zeitraum jeweils kurz vor, bis kurz nach der optimalen Kopplung, wenn die zweite Kopplungsfläche direkt der Koppelfläche des zweiten Lichtleiters gegenübersteht, ein kurzer Lichtimpuls einer LED abgegeben werden, der mit der Lichtintegrationszeit eines Sensors synchronisiert sein kann.

Unabhängig hiervon sieht die Erfindung insbesondere vor, dass die zweiten Koppelflächen auf einer geschlossenen Bahn angeordnet werden, entlang der der zweite Lichtleiter mit seiner Koppelfläche oder eine auf die Koppelfläche des stationär angeordneten zweiten Lichtleiters ausgerichtete Optik bewegt wird.

Des Weiteren sollten zur optimalen Lichteinkopplung die zweiten Koppelflächen der ersten Lichtleiter parallel zur Koppelfläche des zweiten Lichtleiters ausgerichtet werden.

Eine Anordnung der eingangs genannten Art zeichnet sich insbesondere dadurch aus, dass der zweite Lichtleiter entsprechend der Taktung der eingeschalteten LEDs auf die zweite Koppelfläche eines ersten Lichtleiters in Form einer gebogenen Lichtleitfaser von zumindest einer eingeschalteten LED ausrichtbar ist oder dass ein optisches Umlenkelement auf die zweite Koppelfläche eines ersten Lichtleiters einer zugeordneten eingeschalteten LED ausrichtbar ist und das optische Umlenkelement die Strahlung auf die Koppelfläche des stationär angeordneten zweiten Lichtleiters lenkt, dass zum Ausrichten des zweiten Lichtleiters auf eine eingeschaltete LED der zweite Lichtleiter oder bei auf die zweite Koppelfläche ausgerichtetem optischen Umlenkelement diese um eine Achse drehbar sind, wobei der erste und der zweite Kreis in voneinander abweichenden Ebenen die Achse schneiden, und dass der Ausgang des zweiten Lichtleiters auf das Objekt ausgerichtet ist, das ein Zahn, ein Kieferbereich oder ein zahntechnisches Objekt ist.

Die LEDs sollten insbesondere auf einem Kühlkörper als Halterung angeordnet sein, wobei ggf. Peltierelemente vorhanden sind, um Wärme zu vernichten.

Die Anzahl der LEDs kann zwischen 2 und 100 liegen.

Bevorzugterweise sind die ersten Lichtleiter mit ihren zweiten Koppelflächen auf einer Kreisbahn angeordnet, entlang der die Koppelfläche des zweiten Lichtleiters bewegbar ist, wobei die zweiten Koppelflächen der ersten Lichtleiter parallel zu der Koppelfläche des zweiten Lichtleiters ausgerichtet sind.

Um Totzeiten zu reduzieren, ist vorgesehen, dass das Coating der ersten Lichtleiter zumindest im Bereich der zweiten Koppelflächen entfernt ist.

Sofern der zweite Lichtleiter zu den ersten Lichtleitern zu bewegen ist, wird vorgeschlagen, dass der zweite Lichtleiter von einem Halteelement aufgenommen ist, das um eine Achse drehbar ist, die die Halterung für die LEDs, wie eine Ringscheibe, durchsetzt, wobei vorzugsweise die zweiten Koppelflächen geneigt zu der Achse verlaufen.

Bei einem stationär angeordneten zweiten Lichtleiter kann das Einkoppeln von den ersten Lichtleitern über ein optisches Umlenkelement wie Umlenkprisma erfolgen, das auf einer drehbaren Halterung befestigt ist. Dabei kann das optische Umlenkelement von einer Drehscheibe ausgehen, die um eine die Halterung der LEDs durchsetzende Achse drehbar ist, entlang der der zweite Lichtleiter zumindest im Bereich des optischen Umlenkelements verläuft.

Um eine optimale Ein- und Auskopplung zu ermöglichen, ist vorgesehen, dass auf die Basisfläche des Umlenkprismas die zweite Koppelfläche zumindest eines einem eingeschalteten LED zugeordneten ersten Lichtleiters und die Koppelfläche des zweiten Lichtleiters ausgerichtet sind, wobei vorzugsweise auf der Basisfläche Linsen angeordnet sind, die die Strahlung fokussieren.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine erste Ausführungsform einer Anordnung zur Übertragung von pulsbetriebenen LEDs,
- Fig. 2: eine Prinzipdarstellung der Anordnung von ersten und zweiten Lichtleitern,
- Fig. 3: eine zweite Ausführungsform einer Anordnung zur Übertragung von pulsbetriebenen LEDs,
- Fig. 4: eine Ausgestaltung der Anordnung gemäß Fig. 3 im Ausschnitt,
- Fig. 5: eine Prinzipdarstellung zur Verdeutlichung einer kontinuierlichen Leistungsabgabe und
- Fig. 6: eine Prinzipdarstellung zur Verdeutlichung einer gepulsten Betriebsweise.

Um Licht von LEDs (Leuchtdioden) hoher Lichtleistung zu erzielen, ist erfindungsgemäß vorgesehen, dass LEDs, insbesondere Weißlicht-LEDs, im Pulsbetrieb betrieben werden. Hierdurch besteht die Möglichkeit, dass die Leistung bis zum Faktor 50 oder mehr angehoben werden kann, verglichen mit dem Maximalstrom im CW-Betrieb. Die von den pulsbetriebenen LEDs emittierte Strahlung wird sodann über erste Lichtleiter auf einen zweiten Lichtleiter eingekoppelt, von dem die Strahlung hoher Leistung sodann insbesondere zur Beaufschlagung eines zahntechnischen Objektes geleitet wird, das gemessen werden soll.

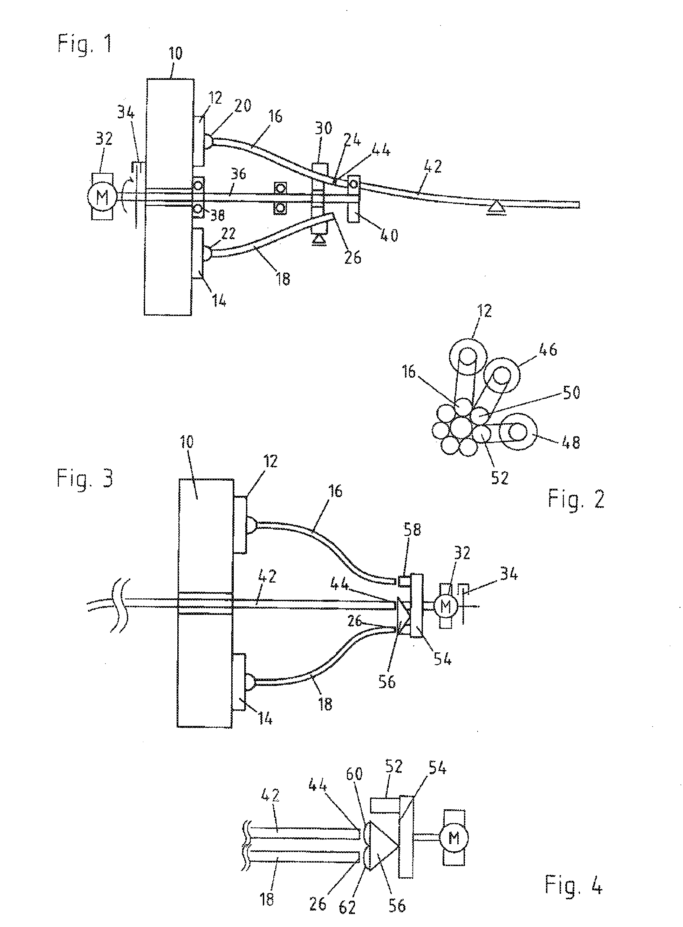

Eine erste Anordnung zur Erzeugung einer entsprechenden LED-Strahlung hoher Leistung ist der Fig. 1 zu entnehmen. So sind auf einem Kühlkörper 10, der Peltierelemente zur besseren Entwärmung, also Kühlung aufweisen kann, ringförmig LEDs 12, 14 angeordnet. Jeder LED 12, 14 ist ein erster Lichtleiter 16, 18 wie kurzes Stück Lichtleitfaser zugeordnet, bei dem es sich insbesondere um Glasfasern oder polymere optische Fasern handeln kann. Die Lichtleiter 16, 18 sind mit einem Coating versehen. Der erste Lichtleiter 16, 18 ist als kurzes Stück Lichtleitfaser ausgebildet, welches ausreichend lang ist, um einen minimalen Biegeradius der Lichtleitfaser in einem S-Schlag nicht zu unterschreiten. Die Länge des Lichtleiters 16, 18 liegt vorzugsweise in einem Bereich zwischen 5 cm bis 15 cm, wobei die Länge von dem minimalen Biegeradius der Lichtleitfaser abhängig ist. Liegen die LEDs 12, 14 beispielsweise auf einem Kreisradius mit R = 10 cm und beträgt der minimale Biegeradius der Lichtleitfaser 5 cm, würde eine Faserlänge von 15 cm benötigt. Wäre der Kreisradius, auf dem die LEDs 12, 14 angeordnet sind R = 5 cm und der minimale Biegeradius der Lichtleitfaser 1 cm, würde eine Lichtleitfaser mit einer Faserlänge von 5 cm benötigt.

Der erste Lichtleiter 16, 18 kann einen Durchmesser im Bereich von 200 µm bis 1 mm aufweisen. Als Material ist vorzugsweise SiO₂ vorgesehen, mit einer numerischen Apertur NA im Bereich von 0,15 bis 0,4. Der Lichtleiter 16, 18 kann einen Quarzkern mit Quarzcladding umfassen. Alternativ können HCS (Hard Clad Silica)-Fasern eingesetzt werden, d. h. ein Lichtwellenleiter mit Quarzglaskern und einem Mantel aus einem speziellen Kunststoff. Derartige HCS-Fasern werden beispielsweise von der Laser Components GmbH angeboten.

Selbstverständlich wird die Erfindung nicht verlassen, wenn die LEDs 12, 14 nicht auf einem Peltierelemente aufweisenden Körper als Halterung angeordnet sind.

Die Lichtleiter 16, 18 weisen eine unmittelbar auf die jeweilige LED 12, 14 ausgerichtete erste Koppelflächen 20, 22 und eine am anderen Ende des Lichtleiters 16, 18 vorhandene zweite Koppelflächen 24, 26 auf. Im Bereich der zweiten Koppelflächen 24, 26 kann das Coating entfernt sein. Hierdurch können Totzeiten reduziert werden. Die ersten Koppelflächen 20, 22 sollten direkt nahe der Chipfläche aufgesetzt sein.

Die Lichtleiter 16, 18 im Bereich der zweiten Koppelflächen 24, 26 sind über eine Halterung 30 fixiert.

Mittels eines Motors 32 mit Positionsencoder 34 wird eine Welle 36 durch ein Lager 38 und durch den scheibenförmigen Kühlkörper 10 geführt. Auf der Welle 36 befindet sich eine Drehscheibe 40, die einen zweiten Lichtleiter 42 aufnimmt, dessen eine Koppelfläche 44 derart auf die zweiten Koppelflächen 24, 26 der ersten Lichtleiter 16, 18 ausgerichtet wird, dass diese nahezu parallel zueinander und vorzugsweise geneigt zur Längsachse der Welle 36 verlaufen. Dabei erfolgt eine Synchronisierung der Bewegung der Drehscheibe 40 und damit der Koppelfläche 44 des zweiten Lichtleiters 42 derart, dass die Koppelfläche 44 dann einer zweiten Koppelfläche 24, 26 gegenübersteht, wenn die LED des entsprechenden ersten Lichtleiters mit Strom beaufschlagt ist, also eingeschaltet ist. Der zweite Lichtleiter 42 weist einen Durchmesser im Bereich von 200 µm bis 1 mm auf und besteht vorzugsweise aus SiO₂ mit einer numerischen Apertur NA im Bereich von 0,15 bis 0,4. Der zweite Lichtleiter weist vorzugsweise einen Quarzkern mit Quarzcladding auf. Alternativ können HCS (Hard Clad Silika)-Fasern, wie bereits zuvor erwähnt, eingesetzt werden.

Bei der Drehbewegung der Drehscheibe 40 sollte die Koppelfläche 44 des Lichtleiters 42 mit geringstem Abstand entlang der zweiten Koppelflächen 24, 26 der ersten Lichtleiter 16, 18 vorbeigeführt werden, um Koppelverluste möglichst gering zu halten. Vorzugsweise sollte der Abstand lediglich durch die Fertigungstoleranzen der Lichtleitfasern begrenzt sein, da ein Aneinanderschleifen der Koppelflächen bzw. Faserenden sicher verhindert werden muss. Der Abstand sollte in einem Bereich von 10 µm bis 200 µm liegen.

Die zuvor beschriebene Anordnung der ersten Lichtleiter 16, 18 ergibt sich auch aus Fig. 2. Man erkennt die auf einem Kreis angeordneten LEDs 12, 46, 48, von denen erste Lichtleiter 16, 50, 52 ausgehen.

Die Fig. 3 und 4 zeigen eine zweite Ausführungsform einer Anordnung zum Übertragen von Strahlung, die von pulsbetriebenen LEDs erzeugt wird, wobei bezüglich der Fig. 1 und 2 für gleiche Elemente gleiche Bezugszeichen benutzt werden. Die pulsbetriebenen LEDs weisen ein Puls-Pause-Verhältnis von kleiner 1 auf. Folglich ist die Ein-Zeit, d. h. die Zeit, in der die LED/LEDs eingeschaltet ist/sind, kleiner als die Aus-Zeiten, die zwischen den Ein-Zeiten liegen. Abhängig von der Integrationszeit des Sensors und der Anzahl der LEDs sowie der tolerierbaren Lichtleistungsschwankungen am Ausgang zweier Lichtleitfasern wird die Pulsdauer vorzugsweise im Bereich 1 µs bis 100 ms eingestellt. Überschreitet die Puls-Spitzenleistung beispielsweise die CW-Leistung der LED um z. B. den Faktor 10, sollte das Puls-Pause-Verhältnis auf jeden Fall kleiner 0,1 sein, damit die mittlere Leistung die zulässige CW-Leistung nicht überschreitet.

So sind entsprechend dem Ausführungsbeispiel der Fig. 1 die Leuchtdioden 12, 14 auf dem Kühlkörper 10 angeordnet. Abweichend vom Ausführungsbeispiel der Fig. 1 ist jedoch der zweite Lichtleiter 54 nicht von einer Drehscheibe 44 aufgenommen, sondern stationär angeordnet. Um ungeachtet dessen die LED-Strahlung einzukoppeln, ist eine Drehscheibe 54 vorgesehen, auf der ein Umlenkprisma 56 angeordnet ist, über die von den ersten Lichtleitern 16, 18 geleitete Strahlung in die Koppelfläche 44 des zweiten Lichtleiters 42 eingekoppelt wird. Man erkennt, dass über das Umlenkprisma 56 und die im Ausführungsbeispiel aus der zweiten Koppelfläche 26 aus dem ersten Lichtleiter 18 austretende Strahlung auf die Koppelfläche 44 des zweiten Lichtleiters 42 umgelenkt wird.

Die Drehscheibe 56 weist bevorzugterweise ein Ausgleichsgewicht 58 auf, um eine gleichförmige Bewegung zu ermöglichen. Angetrieben wird die Drehscheibe über den Motor 32, dem der Positionsencoder 34 entsprechend der Fig. 1 zugeordnet ist.

Der zweite Lichtleiter 42 durchsetzt im Ausführungsbeispiel die Trägerscheibe 10 zentral.

Um eine verbesserte Fokussierung für die aus- bzw. einzukoppelnde Strahlung zu erzielen, können entsprechend der Fig. 4 auf das Umlenkprisma 56 Fokussierlinsen 60, 62 angeordnet sein, über die die Strahlung der ersten Lichtleiter 18 mit überaus geringen Verlusten auf den zweiten Lichtleiter 42 eingekoppelt wird.

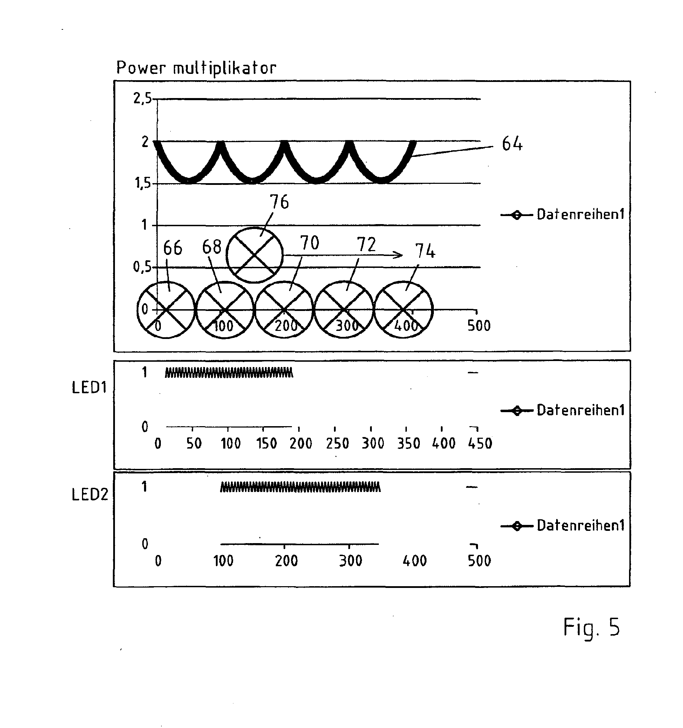

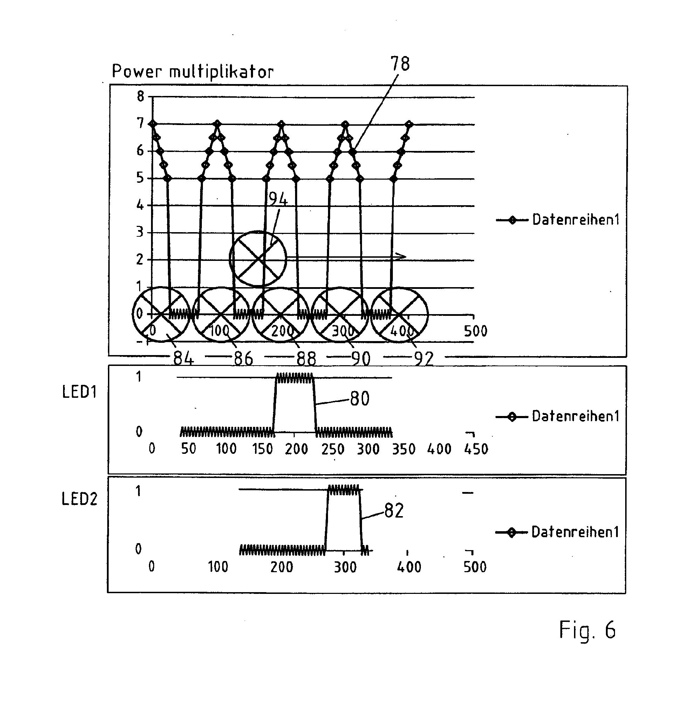

Anhand der Fig. 5 und 6 soll die Möglichkeit der Betriebsweise der erfindungsgemäßen Anordnungen erläutert werden. So wird in Fig. 5 beispielhaft die Taktung der Stromquelle für jede der LEDs und der sich daraus ergebende zeitliche Verlauf der Ausgangsleistung in dem zweiten Lichtleiter 42 erläutert. Die Ausgangsleistung ist der oberen Kurve 64 zu entnehmen. Man erkennt ein möglichst gleichförmiges Ausgangssignal. Um dieses zu erzielen, werden jeweils zwei benachbarte erste Lichtleiter gleichzeitig von den zugehörigen LEDs beleuchtet, so dass beim Übergang von einem ersten Lichtleiter auf den benachbarten ersten Lichtleiter die Lichtleistung nicht zu stark abfällt. Hierdurch wird allerdings der mögliche Duty Cycle halbiert. Die ersten Lichtleiter werden mit den Bezugszeichen 66, 68, 70, 72, 74 und der diese überstreichende zweite Lichtleiter mit 76 gekennzeichnet.

Der Fig. 6 ist ein gepulster Betrieb zu entnehmen und der zeitliche Verlauf der Ausgangsleistung in dem zweiten Lichtleiter. Diese wird durch die obere Kurve 78 symbolisiert. Wie sich aus der Ansteuerung benachbarter LEDs ergibt (Kurven 80, 82), wird dann eine der LEDs 84, 86, 88, 90, 92 eingeschaltet, wenn eine optimale Überlappung mit dem zweiten Lichtleiter 94 vorliegt. Auf diese Weise kann man gemäß dem Ausführungsbeispiel in Fig. 6 die Einschaltdauer der einzelnen LEDs 84, 86, 88, 90, 92 deutlich reduzieren und somit die Spitzenleistung signifikant erhöhen, wie sich aus der Kurve 78 ergibt.

## Patentansprüche

1. Verfahren zum Beaufschlagen eines zu messenden Zahns oder Kieferbereichs oder zahntechnischen Objekts mit hoher Lichtleistung, wobei
• von einer Vielzahl von LEDs emittierte Strahlung in einen Lichtleiter eingekoppelt wird,
• jede LED (12, 14) stationär angeordnet wird, und die LEDs auf einem ersten Kreis mit einem ersten Durchmesser angeordnet werden,
• jeder LED ein erster Lichtleiter (16, 18) in Form einer gebogenen Lichtleitfaser mit ersten und zweiten Koppelflächen (20, 22, 24, 26) zugeordnet wird, wobei die zweiten Koppelflächen auf einem zweiten Kreis mit einem zweiten Durchmesser angeordnet werden,
• jeweils über eine erste Koppelfläche in einen der ersten Lichtleiter Strahlung von einem der LEDs eingekoppelt wird,
• die aus den zweiten Koppelflächen austretende Strahlung der jeweils eingeschalteten LED auf eine Koppelfläche (44) eines zweiten Lichtleiters (42) übertragen wird,
• mit der aus dem zweiten Lichtleiter austretenden Strahlung das zu messende zahntechnische Objekt beaufschlagt wird,
wobei die LEDs (12, 14) im Pulsbetrieb mit einer Pulsdauer zwischen 1µs und 100 ms und einem Puls-Pause-Verhältnis kleiner 1 und aufeinander folgend betrieben werden und dass die zweiten Koppelflächen (24, 26) auf einer geschlossenen Bahn angeordnet werden, entlang der der zweite Lichtleiter (42) mit seiner Koppelfläche (44) oder eine auf die Koppelfläche des stationär angeordneten zweiten Lichtleiters ausgerichtete Optik (56) bewegt wird, und wobei die zweite Koppelfläche bei bewegtem zweiten Lichtleiter und die Optik bei stationär angeordnetem zweiten Lichtleiter um eine Achse gedreht wird und der erste und der zweite Kreis in voneinander abweichenden Ebenen die Achse schneiden.

2. Verfahren nach Anspruch 1,
**dadurch gekennzeichnet,**
**dass** die zweiten Koppelflächen (24, 26) der ersten Lichtleiter (16, 18) parallel zur Koppelfläche (44) des zweiten Lichtleiters (42) ausgerichtet werden.

3. Verfahren nach Anspruch 1 oder 2,
**dadurch gekennzeichnet,**
**dass** die Bewegung des zweiten Lichtleiters (42) mit der Taktung einer Energiequelle synchronisiert wird, über die die LEDs (12, 14) sequenziell eingeschaltet werden.

4. Verfahren nach zumindest einem der vorhergehenden Ansprüche,
**dadurch gekennzeichnet,**
**dass** die Koppelfläche (44) des zweiten Lichtleiters (42) auf zweite Koppelflächen (24, 26) erster Lichtleiter (16, 18) von zwei gleichzeitig eingeschalteten LEDs ausgerichtet wird.

5. Verfahren nach zumindest einem der vorhergehenden Ansprüche,
**dadurch gekennzeichnet,**
**dass** die zweiten Koppelflächen (24, 26) rasterförmig angeordnet werden und dass die über die ersten Lichtleiter (16, 18) geleitete Strahlung über zumindest ein optisches Umlenkelement (56) auf den zweiten Lichtleiter (42) übertragen wird.

6. Verfahren nach zumindest einem der vorhergehenden Ansprüche,
**dadurch gekennzeichnet,**
**dass** zumindest ein optisches Umlenkelement (56) zur Übertragung der Strahlung bewegt wird.

7. Verfahren nach zumindest einem der vorhergehenden Ansprüche,
**dadurch gekennzeichnet,**
**dass** über den zweiten Lichtleiter (42) geführtes Licht ein Objekt beaufschlagt, wobei von dem Objekt reflektierte Strahlung mit einem optischen Sensor gemessen wird und Zeitfolge der eingeschalteten LEDs mit Bildwiederholrate des optischen Sensors wie CCD Kamera synchronisiert wird.

8. Anordnung zum Übertragen von von im Pulsbetrieb betriebenen LEDs emittierter Strahlung über zumindest einen Lichtleiter, umfassend LEDs, erste und zweite Lichtleiter (16, 18, 42), ein zu messendes Objekt sowie ggfs. ein optisches Umlenkelement(56) wobei jeder LED (12, 14) ein erster Lichtleiter (16, 18) mit ersten und zweiten Koppelflächen (20, 22, 24, 26) zugeordnet ist, wobei die ersten Koppelflächen auf einem ersten Kreis mit einem ersten Durchmesser angeordnet sind,
die ersten Lichtleiter mit ihren ersten Koppelflächen jeweils auf eine stationär angeordnete LED ausgerichtet sind,
die zweiten Koppelflächen auf einer einen zweiten Kreis bildenden geschlossenen Kreisbahn mit einem zweiten Durchmesser angeordnet sind und
den zweiten Koppelflächen eine Koppelfläche (44) eines zweiten Lichtleiters (42) zugeordnet ist, wobei der erste Durchmesser größer als der zweite Durchmesser ist,
**dadurch gekennzeichnet,**
**dass** der zweite Lichtleiter (42) entsprechend der Taktung der eingeschalteten LEDs (12, 14) auf die zweite Koppelfläche (24, 26) eines ersten Lichtleiters (16, 18) in Form einer gebogenen Lichtleitfaser von zumindest einer eingeschalteten LED ausrichtbar ist, oder dass ein optisches Umlenkelement (56) auf die zweite Koppelfläche eines ersten Lichtleiters einer zugeordneten eingeschalteten LED ausrichtbar ist und das optische Umlenkelement die Strahlung auf die Koppelfläche (44) des stationär angeordneten zweiten Lichtleiters (42) lenkt, dass zum Ausrichten des zweiten Lichtleiters auf eine eingeschaltete LED der zweite Lichtleiter oder bei auf die zweite Koppelfläche ausgerichtetem optischen Umlenkelement diese um eine Achse drehbar sind, wobei der erste und der zweite Kreis in voneinander abweichenden Ebenen die Achse schneiden, und dass der Ausgang des zweiten Lichtleiters auf das Objekt ausgerichtet ist, das ein Zahn, ein Kieferbereich oder ein zahntechnisches Objekt ist.

9. Anordnung nach Anspruch 8,
**dadurch gekennzeichnet,**
**dass** die LEDs (12, 14) auf einer Halterung (10), insbesondere auf einem gegebenenfalls Peltierelemente aufweisenden Kühlkörper vorzugsweise auf einer kreisförmige Bahn angeordnet sind.

10. Anordnung nach Anspruch 8 oder 9,
**dadurch gekennzeichnet,**
**dass** die ersten Lichtleiter (16, 18) mit ihren zweiten Koppelflächen (24, 26) auf einer Kreisbahn angeordnet sind, entlang der die Koppelfläche (44) des zweiten Lichtleiters (42) bewegbar ist, wobei die zweiten Koppelflächen der ersten Lichtleiter parallel zu der Koppelfläche des zweiten Lichtleiters ausgerichtet sind.

11. Anordnung nach zumindest einem der Ansprüche 8 bis 10,
**dadurch gekennzeichnet,**
**dass** Coating der ersten Lichtleiter (16, 18) zumindest im Bereich der zweiten Koppelflächen (24, 26) entfernt ist.

12. Anordnung nach zumindest einem der Ansprüche 8 bis 11,
**dadurch gekennzeichnet,**
**dass** der zweite Lichtleiter (44) von einem Halteelement (40) aufgenommen ist, das um eine Achse drehbar ist, die die Halterung (10) wie eine Ringscheibe durchsetzt, wobei vorzugsweise die zweiten Koppelflächen (24, 26) geneigt zu der Achse verlaufen.

13. Anordnung nach zumindest einem der Ansprüche 8 bis 12,
**dadurch gekennzeichnet,**
**dass** das optische Umlenkelement ein Umlenkprisma (56) ist, über das die Strahlung auf den stationär angeordneten zweiten Lichtleiter (42) übertragbar ist.

14. Anordnung nach zumindest einem der Ansprüche 8 bis 13,
**dadurch gekennzeichnet,**
**dass** das optische Umlenkelement (56) von einer Drehscheibe (54) ausgeht, die um eine die Halterung (10) der LEDs (12, 14) durchsetzende Achse drehbar ist, entlang der der zweite Lichtleiter (42) zumindest im Bereich des optischen Umlenkelements verläuft.

15. Anordnung nach zumindest einem der Ansprüche 8 bis 14,
**dadurch gekennzeichnet,**
**dass** auf die Basisfläche des Umlenkprismas (56) die zweite Koppelfläche (26) zumindest eines einer eingeschalteten LED (14) zugeordneten ersten Lichtleiters (18) und die Koppelfläche (44) des zweiten Lichtleiters (42) ausgerichtet sind, wobei vorzugsweise auf der Basisfläche die Strahlung fokussierende Linsen (60, 62) angeordnet sind.

## Claims

1. A method for illuminating a tooth, or jaw region, or dental object to be measured with high intensity light, whereby
• radiation emitted by a multitude of LEDs is coupled into a fiber-optic light guide,
• each LED (12, 14) is arranged stationary and the LEDs are arranged on a first circle with a first diameter,
• to each LED is assigned a first fiber-optic light guide (16, 18) in form of a bent optical fiber with first and second coupling surfaces (20, 22, 24, 26), whereby the second coupling surfaces are arranged on a second circle with a second diameter,
• in each case, radiation from one of the LEDs is coupled via a first coupling surface into one of the first fiber-optic light guide,
• the radiation of the respective active LEDs emerging from the second coupling surfaces is transmitted onto a coupling surface (44) of a second fiber-optic light guide (42),
• the radiation emerging from the second fiber-optic light guide is used to illuminate the dental object to be measured,
whereby the LEDs (12, 14) are operated in a pulsed manner with a pulse duration between 1µs and 100ms and a pulse/pause ratio of less than I and are activated sequentially and that the second coupling surfaces (24, 26) are arranged on a closed track, along which is moved the second fiber-optic light guide (42) with its coupling surface (44) or an optical system (56) oriented towards the coupling surface of the stationary second fiber-optic light guide, and whereby for a moving second fiber-optic light guide the second coupling surface is rotated about an axis, and for a stationary arranged second fiber-optic light guide the optical system is moved about the axis, and that the first circle and the second circle intersect the axis in different planes.

2. The method of claim 1,
**characterized in that**
the second coupling surfaces (24, 26) of the first fiber-optic light guides (16, 18) are aligned in parallel to the coupling surface (44) of the second fiber-optic light guide (42).

3. The method of claim 1 or 2,
**characterized in that**
the movement of the second fiber-optical light guide (42) is synchronized with the clocking of a power source, which is used to activate the LEDs (12, 14) in a sequential fashion.

4. The method of at least one of the preceding claims,
**characterized in that**
coupling surface (44) of the second fiber-optical light guide (42) is oriented towards the second coupling surfaces (24, 26) of first fiber-optic light guides (16, 18) of two LEDs that are activated at the same time.

5. The method of at least one of the preceding claims,
**characterized in that**
the second coupling surfaces (24, 26) are arranged in a grid pattern and that the radiation conducted via the first fiber-optic light guides (16, 18) is transmitted via at least one optical deviating element (56) onto the second fiber-optic light guide (42).

6. The method of at least one of the preceding claims,
**characterized in that**
at least one optical deviating element (56) is moved to transmit the radiation.

7. The method of at least one of the preceding claims,
**characterized in that**
light transmitted via the second fiber-optic light guide (42) is incident on an object, whereby radiation reflected by the object is measured with an optical sensor, and time sequence of the activated LEDs is synchronized with frame rate of the optical sensor such as a CCD camera.

8. An arrangement for transmission via at least one first fiber-optic light guide of radiation emitted by pulse-controlled LEDs, with the arrangement comprising LEDs, first and second fiber-optic light guides (16, 18, 42), an object to be measured as well as, if necessary, an optical deviating element (56), whereby assigned to each of the LEDs (12, 14) is a first fiber-optic light guide (16, 18) with first and second coupling surfaces (20, 22, 24, 26), whereby the first coupling surfaces are arranged on a first circle with a first diameter,
in each case, the first fiber-optic light guides with their first coupling surfaces are oriented towards a stationary LED,
the second coupling surfaces are arranged on a closed circular track forming a second circle with a second diameter, and
associated with the second coupling surfaces is a coupling surface (44) of a second fiber-optic light guide (42), whereby the first diameter is greater than the second diameter, **characterized in that**
the second fiber-optical light guide (42) is alignable in accordance with the clocking of the active LEDs (12, 14) relative to the second coupling surface (24, 26) of a first fiber-optic light guide (16, 18), in the form of a curved optical fiber, of at least one active LED, or that an optical deviating element (56) is alignable relative to the second coupling surface of a first fiber-optic light guide of an associated active LED and the optical deviating element directs the radiation onto the coupling surface (44) of the stationary second fiber-optic light guide (42), that for orienting the second fiber-optic light guide towards an activated LED, the second fiber-optic light guide is, or in case of an optical deviating element oriented towards the second coupling surface these are, rotatable about an axis, whereby the first and the second circle intersect the axis in different planes, and that the output of the second fiber-optic light guide is oriented towards the object, which is a tooth, a jaw region, or a dental object.

9. The arrangement of claim 8,
**characterized in that**
the LEDs (12, 14) are arranged on a mount (10), preferably on a circular track and in particular on a heat sink that may contain Peltier elements.

10. The arrangement of claim 8 or 9,
**characterized in that**
the first fiber-optical light guides (16, 18) with their second coupling surfaces (24, 26) are arranged on a circular track along which can be moved the coupling surface (44) of the second fiber-optic light guide (42), whereby the second coupling surfaces of the first fiber-optic light guides are arranged parallel to the coupling surface of the second fiber-optic light guide.

11. The arrangement of at least one of claims 8 to 10,
**characterized in that**
coating of the first fiber-optical light guides (16, 18) is removed at least in the area of the second coupling surfaces (24, 26).

12. The arrangement of at least one of claims 8 to 11,
**characterized in that**
the second fiber-optical light guide (44) is accommodated in a mounting element (40), which is rotatable about an axis that passes through the mount (10) like an annular disk, whereby preferably the second coupling surfaces (24, 26) extend inclined relative to the axis.

13. The arrangement of at least one of claims 8 to 12,
**characterized in that**
the optical deviating element is a deviating prism (56), via which the radiation can be transferred onto the stationary second fiber-optic light guide (42).

14. The arrangement of at least one of claims 8 to 13,
**characterized in that**
the optical deviating element (56) originates from a rotating disk (54), which is rotatable about an axis passing through the mount (10) of the LEDs (12, 14), and along this axis extends the second fiber-optic light guide (42) at least in the region of the optical deviating element.

15. The arrangement of at least one of claims 8 to 14,
**characterized in that**
oriented towards the base area of the deviating prism (56) is the second coupling surface (26) of at least one first fiber-optic light guide (18), which is associated with an activated LED (14), and the coupling surface (44) of the second fiber-optic light guide (42), whereby radiation-focusing lenses (60, 62) are preferably arranged on the base surface.

## Revendications

1. Procédé d'exposition à un rendement lumineux élevé d'une dent ou d'une partie de la mâchoire ou d'un objet dentaire devant être mesuré, sachant
• qu'un rayonnement émis par une multitude de DEL est associé à un guide optique,
• que chaque DEL (12, 14) est fixe et que les DEL sont disposées sur un premier cercle ayant un premier diamètre,
• qu'un premier guide optique (16, 18) sous forme d'une fibre optique coudée présentant des premières et secondes surfaces de couplage (20, 22, 24, 26) est associé à chaque DEL, sachant que les secondes surfaces de couplage sont disposées sur un second cercle ayant un second diamètre,
• que le rayonnement de l'une des DEL est respectivement associé à l'un des premiers guides optiques via une première surface de couplage,
• que le rayonnement émanant des secondes surfaces de couplage de la DEL respectivement allumée est transmis à une surface de couplage (44) d'un second guide optique (42),
• que l'objet dentaire devant être mesuré est exposé au rayonnement émanant du second guide optique,
sachant que les DEL (12, 14) fonctionnent successivement, en mode pulsé et pour une durée d'impulsion située entre 1 µs et 100 ms et un rapport impulsion-pause inférieur à 1 et que les secondes surfaces de couplage (24, 26) sont disposées sur une trajectoire fermée, le long de laquelle le second guide optique (42) et sa surface de couplage (44) ou bien une optique (56) orientée vers la surface de couplage du second guide optique fixe se déplacent et sachant que la seconde surface de couplage du second guide optique en mouvement ainsi que l'optique du second guide optique fixe tournent autour d'un axe et que le premier et le second cercles coupent l'axe à des niveaux divergents.

2. Procédé selon la revendication 1,
**caractérisé en ce**
**que** les secondes surfaces de couplage (24, 26) des premiers guides optiques (16, 18) sont orientées parallèlement à la surface de couplage (44) du second guide optique (42).

3. Procédé selon la revendication 1 ou 2,
**caractérisé en ce**
**que** le mouvement du second guide optique (42) est synchronisé avec le cycle d'une source d'énergie permettant d'allumer les DEL (12, 14) séquentiellement.

4. Procédé selon au moins l'une des précédentes revendications,
**caractérisé en ce**
**que** la surface de couplage (44) du second guide optique (42) est orientée vers les secondes surfaces de couplage (24, 26) des premiers guides optiques (16, 18) de deux DEL allumées simultanément.

5. Procédé selon au moins l'une des précédentes revendications,
**caractérisé en ce**
**que** les secondes surfaces de couplage (24, 26) sont disposées sous forme de grille et que le rayonnement, guidé par les premiers guides optiques (16, 18), est transmis via au moins un élément de déviation optique (56) au second guide optique (42).

6. Procédé selon au moins l'une des précédentes revendications,
**caractérisé en ce**
**qu'**au moins un élément de déviation optique (56) est déplacé pour le transfert du rayonnement.

7. Procédé selon au moins l'une des précédentes revendications,
**caractérisé en ce**
**qu'**un objet est exposé à la lumière conduite par le second guide optique (42), sachant que le rayonnement réfléchi par l'objet est mesuré à l'aide d'un capteur optique et la fréquence de la DEL allumée est synchronisée avec la fréquence de rafraîchissement du capteur optique, par exemple une caméra CCD.

8. Ensemble permettant la transmission d'un rayonnement émis par des DEL fonctionnant en mode pulsé via au moins un guide optique, comprenant des DEL, un premier et un second guides optiques (16, 18, 42), un objet devant être mesuré ainsi que le cas échéant un élément de déviation optique (56), sachant qu'un premier guide optique (16, 18) avec des premières et secondes surfaces de couplage (20, 22, 24, 26) est associé à chaque DEL (12, 14), sachant que les premières surfaces de couplage sont disposées sur un premier cercle ayant un premier diamètre,
que les premiers guides optiques et leurs premières surfaces de couplage sont respectivement orientés vers une DEL fixe,
que les secondes surfaces de couplage sont disposées sur une trajectoire circulaire fermée formant un second cercle et ayant un second diamètre et qu'une surface de couplage (44) d'un second guide optique (42) est associée aux secondes surfaces de couplage, le premier diamètre étant supérieur au second diamètre,
**caractérisé en ce**
**que**, en fonction du cycle des DEL allumées (12, 14), le second guide optique (42) peut être orienté vers la seconde surface de couplage (24, 26) d'un premier guide optique (16, 18) sous forme d'une fibre optique coudée d'au moins une DEL allumée, ou qu'un élément de déviation optique (56) peut être orienté vers la seconde surface de couplage d'un premier guide optique d'une DEL allumée associée et l'élément de déviation optique dirige le rayonnement vers la surface de couplage (44) du second guide optique fixe (42), que pour orienter le second guide optique vers une DEL allumée du second guide optique ou pour orienter l'élément de déviation optique vers la seconde surface de couplage, ces derniers peuvent tourner autour d'un axe, sachant que le premier et le second cercles coupent l'axe à des niveaux divergents, et que la sortie du second guide optique est orientée vers l'objet, lequel est une dent, une partie de la mâchoire ou un objet dentaire.

9. Ensemble selon la revendication 8,
**caractérisé en ce**
**que** les DEL (12,14) sont disposées sur un support (10), notamment sur un dissipateur de chaleur comprenant le cas échéant des éléments Peltier, de préférence sur une trajectoire circulaire.

10. Ensemble selon la revendication 8 ou 9,
**caractérisé en ce**
**que** les premiers guides optiques (16, 18) et leurs secondes surfaces de couplage (24, 26) sont disposés sur une trajectoire circulaire, le long de laquelle la surface de couplage (44) du second guide optique (42) peut se déplacer, sachant que les secondes surfaces de couplage du premier guide optique s'étendent parallèlement à la surface de couplage du second guide optique.

11. Ensemble selon au moins l'une des revendications 8 à 10,
**caractérisé en ce**
**qu'**il n'y a pas d'enrobage à proximité des premiers guides optiques (16, 18) au moins dans la zone des secondes surfaces de couplage (24, 26).

12. Ensemble selon au moins l'une des revendications 8 à 11,
**caractérisé en ce**
**que** le second guide optique (44) est maintenu par un élément de retenue (40) pivotant autour d'un axe et qui traverse le support (10) tel qu'une pièce annulaire, sachant que les secondes surfaces de couplage (24, 26) s'étendent de préférence de manière inclinée par rapport à l'axe.

13. Ensemble selon au moins l'une des revendications 8 à 12,
**caractérisé en ce**
**que** l'élément de déviation optique est un prisme de déviation (56) grâce auquel le rayonnement peut être transmis au second guide optique fixe (42).

14. Ensemble selon au moins l'une des revendications 8 à 13,
**caractérisé en ce**
**que** l'élément de déviation optique (56) part d'un disque rotatif (54) pouvant pivoter autour d'un axe traversant le support (10) des DEL (12, 14) et le long duquel le second guide optique (42) s'étend au moins dans la zone de l'élément de déviation optique.

15. Ensemble selon au moins l'une des revendications 8 à 14,
**caractérisé en ce**
**que** la seconde surface de couplage (26) d'au moins un premier guide optique (18) associé à une DEL allumée (14) et la surface de couplage (44) du second guide optique (42) sont orientées vers la surface de base du prisme de déviation (56), sachant que les lentilles (60, 62) focalisant le rayonnement sont disposées de préférence sur la surface de base.
